# EUROPEAN PATENT APPLICATION

(11) **EP 2 924 632 A1**
(43) Date of publication of application: **30.09.2015**
(21) Application number: 15160047.5
(22) Date of filing: 20.03.2015
(51) Int. Cl.: G06Q 10/10, G06Q 40/08

(54) **INSURANCE PRODUCT COMPILATION SYSTEM**

(30) Priority: 21.03.2014 AU 2014900992
(71) Applicant: Ensurance IT Pty Ltd, Milsons Point, NSW 2061 (AU)
(72) Inventor: Hicks, Stefan, Milsons Point, NSW 2061 (AU); Neumeyer, Paul, Milsons Point, NSW 2061 (AU)
(74) Representative: DREISS Patentanwälte PartG mbB

(57) **Abstract**

An insurance product compilation system comprising a communication bus for establishing a communications channel with a client system via a network, receiver for receiving a customer product request from the client system via the network, processor for automatically generating customer questions, means for presenting the customer questions to the client system via the communications channel, receiver for receiving customer responses to the customer questions, processor for automatically deriving product requirements from the customer responses, search engine for automatically retrieving a plurality of modules that satisfy product requirements, the modules having compilation restrictions that limit the incorporation of the module within an insurance product, and compilation engine for compiling an insurance product from the modules that satisfies the customer requirements and satisfies the compilation restrictions.

## Description

The present invention relates to an insurance product compilation system and, in particular, for a system to compile co-insurance products.

Insurance policies are regularly sold online through the websites of insurance companies or insurance brokers. In the case of an insurance company website, customers are invited to enter their insurance requirements and the insurance company will search through its standard insurance policies to find one suitable for the customer. The customer is presented with options of policies and the cover and cost of the policy is identified.

Often insurance brokers are provided with a number of products from multiple insurance companies. Brokers can search through the products available to them from the various insurance companies to identify those products matching the customer requirements. These products are presented to the customer along with the coverage and cost.

Overall, internet and online availability of insurance products has facilitated straightforward access to insurance products for customers.

In general, insurance policies are underwritten by a single insurance company. In very specific cases, typically when the exposure to a particular insurance company might be excessive, customers may be able to obtain co-insurance for a particular building or event from multiple insurance companies. In such cases, different insurance companies underwrite different risk events or different financial values within the policy. Such co-insurance policies are complicated and tend to be negotiated on a case by case basis by insurance company personnel.

### Summary of Invention

Disclosed in a first aspect, an insurance product compilation process comprising, establishing a communications channel with a client system via a network, receiving a customer product request from the client system via the network,
automatically generating customer questions, presenting the customer questions to the client system via the communications channel,
receiving customer responses to the customer questions,
automatically deriving product requirements from the customer responses,
automatically retrieving a plurality of modules that satisfy product requirements, the modules having compilation restrictions that limit the incorporation of the module within an insurance product, and
compiling an insurance product from the modules that satisfies the customer requirements and satisfies the compilation restrictions.

Further embodiments comprise the step of comparing the module restriction requirements of the retrieved modules when compiling the insurance product, the retrieved modules being combined in dependence on the restriction requirements.

In further embodiments the compilation restrictions for a module are predefined and specific to each module.

In further embodiments the compilation restrictions of modules comprise restricting combination of a first module with a second module within an insurance product.

In further embodiments the compilations restrictions of modules comprise only allowing a module to be included in an insurance product in combination with a designated module.

Further embodiments automatically generate further customer questions in dependence on the modules included in the insurance product.

In further embodiments the modules have a value, comprising calculating the value of the insurance product from the combination of the values.

In further embodiments the combination is the sum of the values.

In further embodiments the value of the module is dependent on other modules are compiled into the insurance product.

Further embodiments generate the customer questions in dependence on the product request.

Further embodiments generate an insurance product document based on the modules compiled in the insurance product.

In further embodiments the product requirements comprise risk events.

In further embodiments the product requirements comprise financial levels of insurance cover.

In further embodiments the modules comprise specific financial levels of insurance cover for specific risk events.

Disclosed in a second aspect, an insurance product compilation system comprises:
Communication bus for establishing a communications channel with a client system via a network,
Receiver for receiving a customer product request from the client system via the network,
Processor for automatically generating customer questions,
Means for presenting the customer questions to the client system via the communications channel,
Receiver for receiving customer responses to the customer questions,
Processor for automatically deriving product requirements from the customer responses,
Search engine for automatically retrieving a plurality of modules that satisfy product requirements, the modules having compilation restrictions that limit the incorporation of the module within an insurance product, and
Compilation engine for compiling an insurance product from the modules that satisfies the customer requirements and satisfies the compilation restrictions.

In further embodiments the compilation engine compares the module restriction requirements of the retrieved modules when compiling the insurance product, the retrieved modules being combined in dependence on the restriction requirements.

In further embodiments the compilation restrictions for a module are predefined and specific to each module.

In further embodiments the compilation restrictions of modules comprise restricting combination of a first module with a second module within an insurance product.

In further embodiments the compilation restrictions of modules comprise only allowing a module to be included in an insurance product in combination with a designated module.

In further embodiments the processor automatically generates further customer questions in dependence on the modules included in the insurance product.

In further embodiments the modules have a value, comprising a calculator to calculate the value of the insurance product from the combination of the values.

In further embodiments the combination is the sum of the values.

In further embodiments the value of the module is dependent on other modules included in the insurance product.

In further embodiments generate the customer questions in dependence on the product request.

In further embodiments a document generator generates an insurance product document based on the modules compiled in the insurance product.

In further embodiments the product requirements comprise risk events.

In further embodiments the product requirements comprise financial levels of insurance cover.

In further embodiments the modules comprise specific financial levels of insurance cover for specific risk events.

Disclosed in a third aspect, an insurance product compilation process comprising:
establishing a communications channel with a client system via a network,
receiving a customer product request from the client system via the network,
automatically generating customer questions in dependence on the customer product request,
presenting the customer questions to the client system via the communications channel,
receiving customer responses to the customer questions,
automatically deriving product requirements from the customer responses,
automatically retrieving a plurality of modules that satisfy product requirements using customer responses, and
compiling at least one product from the modules that satisfies the customer requirements.

Further embodiments comprise the further step of:
receiving across a communications channel identification of customer information fields required to obtain the requested product;
extracting from the identified customer information fields a set of the customer information fields required to retrieve product criteria for the requested product;
wherein the automatically generated questions are associated with the set of customer information fields.

Further embodiments comprise the step of determining additional customer information fields beyond the set of customer information fields comprised in the identified customer information fields; and, providing dummy information for the additional customer information fields when retrieving the modules.

Further embodiments comprise the step of presenting the product criteria to the client system via the communications channel.

Further embodiments comprise the further steps of:
receiving a customer request to retrieve at least one of the compiled products;
determining additional customer information fields required to retrieve the requested compiled product; and,
generating further customer questions in dependence on additional information fields being required.

In further embodiments the modules have compilation restrictions that restrict the incorporation of the module within an insurance product, the compiled product satisfying the compilation restrictions.

In further embodiments the set of customer information fields includes all the identified customer information fields.

In further embodiments the product criteria is product price.

In further embodiments the compilation restrictions of modules comprise restricting combination of a first module with a second module within an insurance product.

Disclosed in a fourth aspect an insurance product compilation system comprises:
Communication bus for establishing a communications channel with a client system via a network,
Receiver for receiving a customer product request from the client system via the network,
Processor for automatically generating customer questions,
Means for presenting the customer questions to the client system via the communications channel,
Receiver for receiving customer responses to the customer questions,
Processor for automatically deriving product requirements from the customer responses,
Search engine for automatically retrieving a plurality of modules that satisfy product requirements, , and
Compilation engine for compiling an insurance product from the modules that satisfies the customer requirements.

Further embodiments comprise receiver for receiving across a communications channel identification of customer information fields required to obtain the requested product;
extraction engine for extracting from the identified customer information fields a set of the customer information fields required to retrieve product criteria for the requested product;
wherein the automatically generated questions are associated with the set of customer information fields.

In further embodiments the extraction engine determines additional customer information fields beyond the set of customer information fields comprised in the identified customer information fields; and, the search engine provides dummy information for the additional customer information fields when retrieving the modules.

Further embodiments comprise a transmitter to transmit product criteria associated with compiled insurance products to the client system via the communications channel.

Further embodiments comprise:
Receiver for receiving a customer request to retrieve at least one of the compiled products from the client system via the communications channel;
Extraction engine determining additional customer information fields required to retrieve the requested compiled product; and,
Processor generating further customer questions in dependence on additional information fields being required.

In further embodiments the compilation engine receives compilation restrictions associated with modules that restrict the incorporation of the module within an insurance product, the compilation engine compiling products satisfying the compilation restrictions.

In further embodiments the set of customer information fields includes all the identified customer information fields.

In further embodiment the product criteria is product price.

### Brief Description of the Drawings

The present invention will now be described, by way of example only, with reference to the accompanying drawings in which:
Figure 1 is an illustration of network connection in an embodiment of the invention.
Figure 2 is a flow diagram showing the steps performed by an embodiment of the invention;
Figure 3 is an illustration of the components within an embodiment of the present invention; and
Figure 4 is a flow diagram showing steps performed by an embodiment of the invention.

### Detailed Description of the Drawings

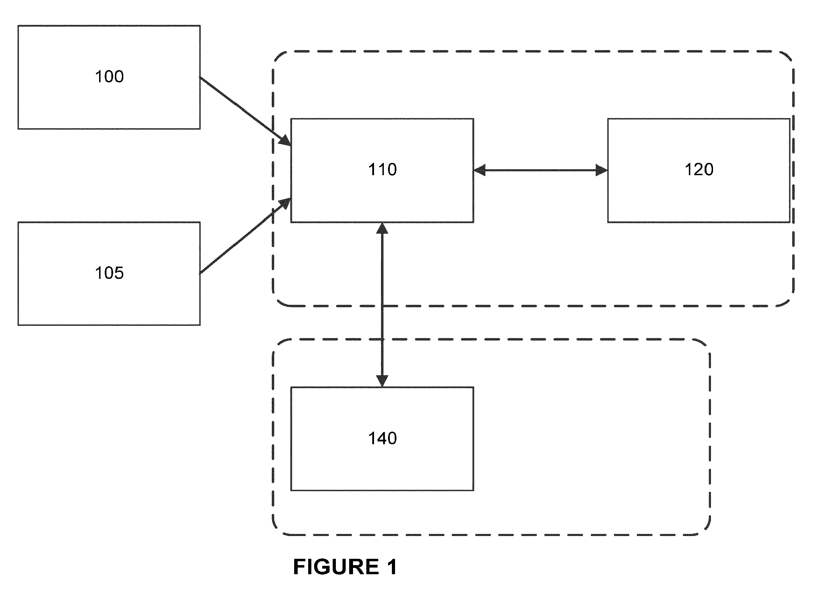

Referring now to the drawings, Figure 1 shows an embodiment in which customers looking for insurance cover products are able to log into an online website offering insurance products. In this first embodiment the website is hosted by an insurance broker authorised to offer and sell insurance policies from multiple insurance companies. Typically, the website is accessible via the internet and may be accessed on a laptop 100, mobile phone 105 or any other network connected device. The devices are connected to the server 110 of the insurance broker.

In the example of Figure 1 a database 120 is positioned within the insurance broker's environment 130. The database includes details of insurance products from one or more insurance product providers. The database includes identification of the customer data fields required in order for a customer to be provided a quote or an offer for an insurance product. The database also includes rules relating to the insurance products including rules about whether insurance products can be combined with other products either offered by the insurance product provider or other insurance product providers.

The broker system includes a processor for polling the servers and databases of different insurance product providers to request latest products and associated rules and required customer data fields. Such systems have the advantage that product information within the broker databases is kept up to date. In some systems the broker server can register to receive updates to product information from insurance product providers.

In other systems the product information is not stored in local databases but, instead, is retrieved directly from insurance product providers systems. Rather than retain insurance product information in the broker's database the broker system can query the insurance companies directly to identify up to date policies and up to date rules. In such system broker server is connected to insurance product providers' database 140. This system has the advantage that the information provided about the insurance product is up to date. The broker server is connected to the product databases via a communications network. The network may be a fixed line or mobile network.

In some systems the broker system holds a database locally and is also connected to external databases hosted by product providers. Such systems have the option of storing certain product data locally and also retaining real time data from insurance providers.

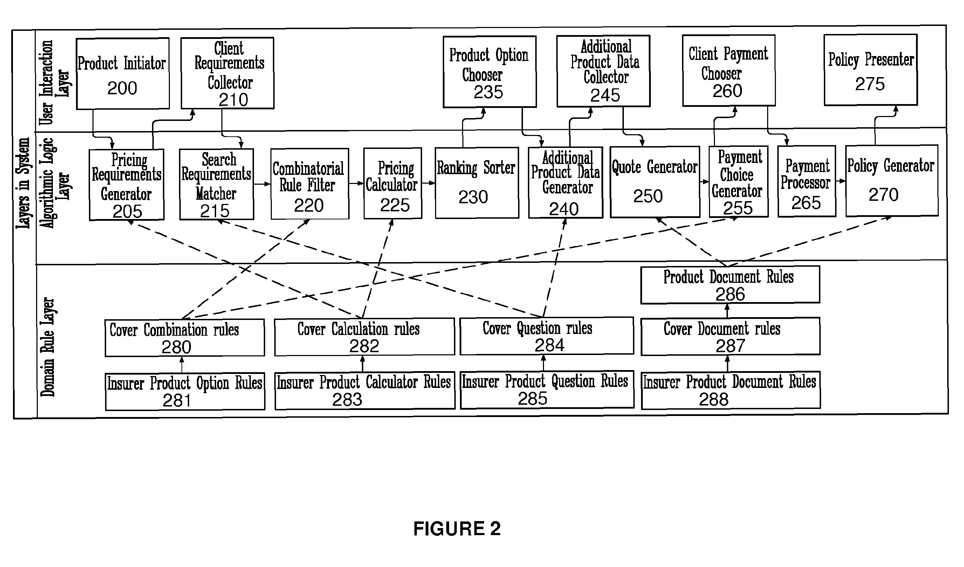

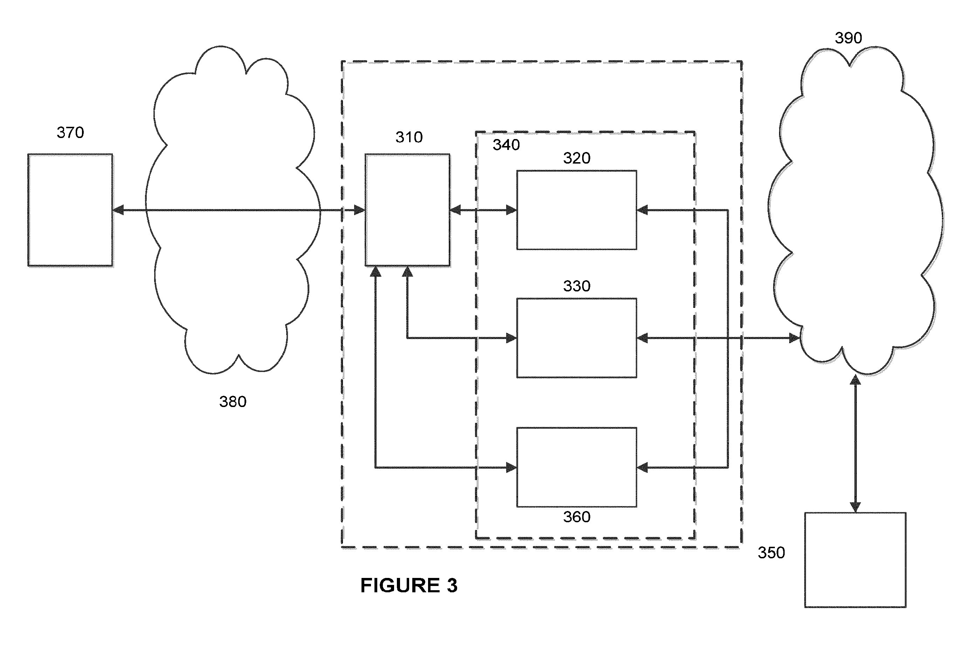

Figures 2 and 3 illustrate the physical infrastructure and the steps for building insurance products and providing product offers to a customer.

The system operates in a two stage process. The system allows a customer to select his product requirements. In a first stage the system builds a number of products which meet the customer's product requirements. The products are presented to the customer with a product price (quote). After selection of a product by the customer, the system executes a second stage of the process in which it obtains the selected product for the customer.

The first stage of the process builds the products and obtains a product price for the products. Generally, the price of an insurance product is calculated based on a number of customer information fields, for example for house insurance a product price may be calculated based on the location of the house, the value of the house and the financial level of insurance required. These information fields represent a subset of the total information fields required in order to apply for and obtain a formal product offer from a product provider. In the first stage of the process the system obtains the information fields required to build a product and obtain a product price.

If a product is selected, the system obtains any additional information fields in the second stage to obtain the product for the customer. For example, the decision of whether the insurance product is actually offered to a customer also considers a number of different information fields, for example the customer's claim history.

Additionally, there are certain factors and rules which determine whether an insurance policy or components of a policy can be combined with components of other policies.

Figure 3 illustrates a system for generating insurance products and product prices. Database 350 stores the product information including the components of the product, information fields used to build the product and rules associated with the product. The product information is used to determine whether and how an insurance product can be created and the product price.

As discussed above, the database may be stored in the broker system and/or in the system of the insurance product provider. In some systems some information is held at the broker database and some information is held at the insurance product provider database. Database 350 is located in the domain rule layer of the system as shown in Figure 2.

The system includes a series of engines for interrogating the databases, compiling products and product prices and identifying information fields required from the customer to build the product. System 300 includes search engine 320, compilation engine 330 and information field engine 360. The engines operate within the algorithmic logic layer shown in Figure 2. Search engine 320 generates queries for database 350 based on user input to extract product information, including rules, compilation rules and prices. Results from database 350 are provided to compilation engine 330 for analysis and compilation into insurance products and prices. Compilation engine builds the products using rules associated with the policies retrieved from database 330. Information field engine 360 identifies what information fields are required based on the product information and creates questions to obtain the information fields from the customer.

Data and instructions are directed in and out of the engines via processor 310. Processor 310 is connected to customer system 370 via communications network 380. Communications network 380 may be a fixed line network connection or a mobile network connection network. Communications networks 390 and 380 may be the same communications network.

The process for generating a customer insurance product is now disclosed with reference to Figures 2 and 3. The system is initiated when a customer connects to the system from customer system 370. On connection to the insurance broker system the customer is requested to identify the insurance cover required. The cover presents the customer with an opportunity to select a product. This may be presented to the customer as a list of options, for example in a drop down box. The type of insurance required is selected by the customer, for example car insurance, home insurance, business insurance, personal insurance, etc. On receipt of the product request, the system activates the product initiator 200. Product initiator 200 generates an initial search query for search engine 320 to retrieve confirmation of which information fields are required from the customer in order to generate products meeting the customer requirements and the product price. Search engine 320 accesses insurance cover calculation rules module 282 associated with insurer product calculator rules modules 283. These modules are stored in the databases and identify the rules for calculating prices for insurance products. The results of the query are provided to information field engine 360. The cover calculation rules identify the information fields required in order that the insurance provider can provide a price for a particular product. Typically, these information fields represent a subset of the total information fields that are required by a product provider in order to confirm that a product can be offered to a customer. In some cases this is the minimum information required in order to provide a price for a product.

Information field engine 360 extracts the information fields required for pricing and compiles a list of these information fields required by the insurance providers. The information fields required for pricing may differ between insurance product providers. It generates an initial questionnaire requesting the necessary information fields from the customer. The questionnaire typically only includes questions related to the information fields for pricing. In the example of Figure 2 the questionnaire is generated by pricing requirements generator module 205. The questionnaire is presented to customer system across the communications network.

The questionnaire may be compiled based on a series of pre-loaded questions which are defined to retrieve specific customer information fields. For example the system may have a specific question prepared to obtain the information field "value of property".

The system generally operates within three specific layers shown in Figure 2, including the user interaction layer in which queries are presented by the insurance system to be responded to by the user by user input, the algorithmic logic layer in which the system processes information and obtains data from the databases, and the domain rule layer in which the databases are located.

At 210 the system presents a series of questions to the customer requesting information about the insurance cover required. As discussed above, at this first stage of the process, the system requests information fields to enable product quotes to be obtained for the customer. For example, if the customer requires commercial business insurance the system will raise queries around the premises, the value of assets within the premises, location and other relevant considerations.

Once the customer has entered the required information at 210 the processor processes the customer information and generates a series of queries to the search engine in order to obtain products and product prices for the customer.

The search engine queries the database 350 to identify available policies meeting the customer requirements. The database contains insurance policies of multiple insurance companies. Each policy provides insurance for various events up to certain financial limitations. Each policy may be available individually or is available to be combined with other policies in order to form part of a co-insurance policy. In particular, the policy may have restrictions, for example limitations on other insurers with which it can be combined in a co-insurance policy, or other restrictions which may be geographical or require particular criteria from applicants in order for them to qualify for that policy. These rules are stored within the database. The restrictions may vary if the policy is provided as a sole insurance policy or in combination with another insurer within a co-insurance policy. The terms and conditions of the policy are stored in the database along with the other information including the cost. The cost of the policy may also be variable depending on whether the cover is offered as a sole policy or as part of a co-insurance policy.

Once the insurance requirements have been entered at 210 the search engine 320 searches its database 350 at 215 for appropriate insurance coverage for the customer. The search engine looks for insurance policies or combinations of insurance policies within the database which meet the customer requirements. The search engine initially looks at the attributes of each insurance policy to construct policies meeting the requirements of the customer. The system works with the restrictions of each policy and rules associated with these policies to determine whether they can be combined using the combinational rule filter 220. This information is based on rules provided by the insurers stored with database 280 281 offering the policies and any rules or restrictions associated with the cover.

Once co-insurance policies have been created which meet the rules and restrictions of the insurers and meet the requirements of the customer each potential policy is priced using the pricing calculator 225. In co-insurance policies the calculation will include contributions from each distinct module of that policy. At this stage any pricing considerations are incorporated, for example whether the module may be priced differently whether combined with modules from other insurance companies as part of a co-insurance policy.

During the quote generation process search engine 320 and compilation engine 330 execute the search requirements matcher module 215, combinational rule filter module 220 and pricing calculator 225. In these steps the search engine 320 interrogates the various databases of the insurance providers, or its own database housing insurance product information, to retrieve and/or generate insurance products and product quotes for the customer. The rules and information is retrieved from various databases including cover combination rules 280 provided by insurer product options rules, cover calculation rules provided by insurer product calculator rules and cover question rules provided by insurer product question rules. The rules, policy components and pricing from these databases is fed to the compilation engine to generate a series of quotes for different insurers' policies or difference co-insurance policy. A co-insurance policy in one which is underwritten by more than one insurance product provider.

Although the data presented by the customer is sufficient to meet the requirements for providing a product price for the insurance product, some insurance product providers may require additional fields of information to be provided in order to provide that price, even though the additional information may not materially affect the price. For example, the information field of customer age may not be materially relevant for the price of the product but may be required in order that the search engine can retrieve the product price information. Such required fields are retrieved from the cover question rules module 284. In situations where additional information is required to generate a product price, search engine 320 may generate a 'dummy' information field to provide the necessary information. This step provides the advantage that a customer is not burdened at the product price stage by providing information which is not materially relevant to the product price. Instead, the system is able to generate multiple quotes from multiple insurers for insurance products including, where applicable and available, co-insurance products by requesting only that information required to generate a product price. This reduces the time of the product price application process for the customer significantly.

Any additional information required in order to complete a formal quote, where the system has generated a 'dummy' answer to complete the required information field is recorded by the system against the product.

After pricing the policies these are ranked for presentation to the customer using ranking sorter 230. Policies may be ranked based on different criteria, including price, how accurately the policy meets the requirements of the customer or any other relevant criteria. The policies are presented to the customer at 235 for selection. As discussed above, in certain situations the policies may be offered to the customer only provisionally at 235 and require certain additional customer information before the offer can be confirmed. This is the case where 'dummy' information was provided by the system during the quote process. If any policies are collated and offered to the customer which require further information, this requirement for additional information may be indicated to the customer at 235 for consideration during selection.

Once the customer has selected the policy at 235 the system determines whether any additional data is required from the customer using Additional Product Data Generator module 240. The additional questions are provided from database 285 284. Alternatively, as discussed above, the additional required information may have been recorded against the product. The information field engine 360 generates questions necessary to obtain the required information fields from the customer.

If so, the additional information required from the customer is requested at 245. Once the additional information has been provided at 245 or if no additional information was required the system generates a formal quote for the customer at 250. In certain situations the additional information provided by the customer may result in the customer not meeting the requirements for the particular product. For example, as discussed above, questions around claim history may not materially affect the price of the insurance product but do influence whether or not a product is offered to a customer. The 'dummy' answer provided by the system may indicate 'no claims history' in order to retrieve a product price. If a customer selects the quote and confirms that he has a claim history this may not meet the insurer provider requirements.

Any relevant rules are applied from product document rules database 286 generated from cover document rules 287 and insurer product document rules 288 to provide the formal quote. Typically the formal quote is binding offer valid for a designated time period and a commitment from the insurance provider that it will provide that policy cover to the customer.

At this stage the system checks against the insurance policies selected as to whether there are any particular payment requirements at 255 and, once any payment requirements have been determined, the price along with payment options is presented to the customer at 260. The customer is able to complete the purchase of insurance policies by initiating payment at 265. After the transaction has been completed and payment has been confirmed the system generates the insurance policy at 270 using any relevant document rules 286 287 288 and provides the policy to the customer at 275.

Embodiments of the invention enable the system to build multiple products meeting the customer requirements in a reduced time by selectively requesting information fields which materially affect the price of a product. The search engine and compilation engines use rules from the product databases to build products and generate product prices. The engines extract any information fields which do not materially affect the product price but are required to generate a product and a price and populate these fields with 'dummy' information. This 'dummy' information enables the system to provide a product and product price to customers. By only requesting the information fields required for product price, a customer is able to be provided with multiple products which meet their requirements in a short time frame compared with completing all information fields necessary for applying for a product.

Once a customer has selected a product from those products presented to the customer system, the system identifies any additional information fields required to obtain the product and replaces the 'dummy' information with information from the customer.

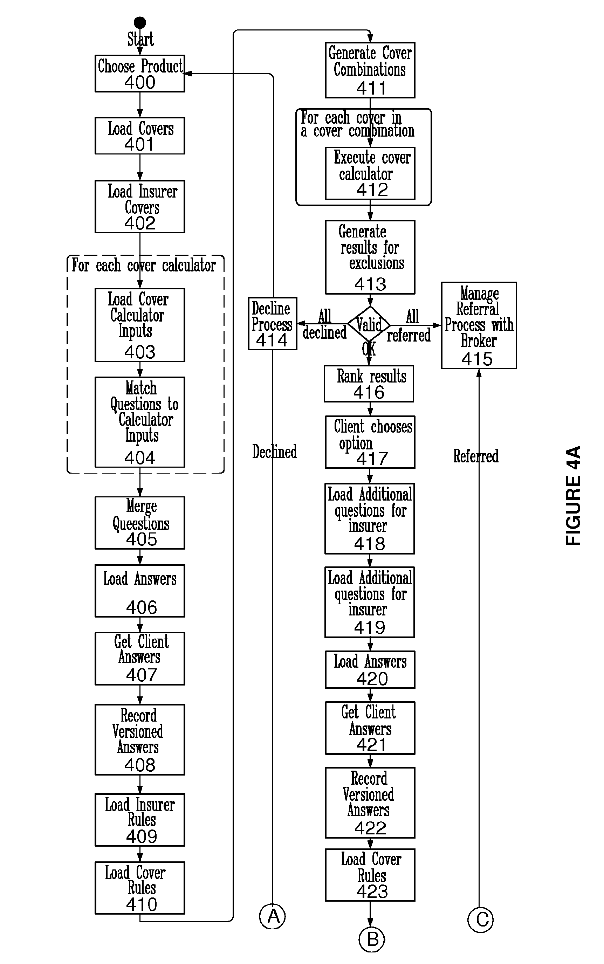

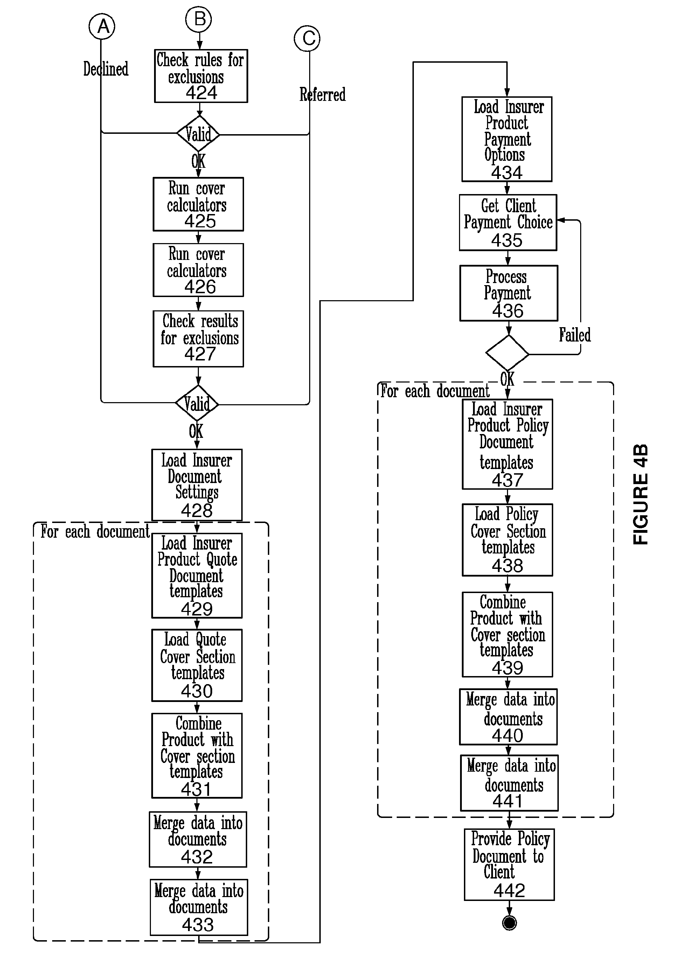

An example of the insurance compilation is now provided with reference to Figure 4. In this example the system is configured with a Business Pack (Bizpack) product including various different elements of cover within the product. Three insurers, ABC, KLM and XYZ provide different subsets of the covers for that product. It will be clear that for simplification purposes some emissions have been made to the example, including not showing the calculation of government changes and duties, and not including the full number of questions or full complexity of calculations for the real Bizpack product. This example demonstrates the fundamental combination of covers and insurers into a product and the mechanisms involved.

Bizpack insurance products contain the following sections for most insurance companies:
1. Public and Products Liability
2. General Property
3. Business Property
4. Electronic Equipment
5. Theft
6. Money
7. Glass
8. Machinery Breakdown
9. Business Interruption
10. Management Liability
11. Tax Audit

As an example we will assert:
The system has the following global question setup
   1. Question Code "Turnover"
      a. Label: "What is your turnover"
      b. Datatype: Money
      c. Validation 01: >0
      d. Validation 02: < MaxMoneyValue
   2. Question code "PL_Liability"
      a. Label: "What limit of PL liability would you like"
      b. Datatype: Money
      c. Datasource: enumeration ($1m, $5m, $10m)
      d. Validation 01: match enumeration
   3. Question code "ANZSICIndustry"
      a. Label: "What is your industry"
      b. Datatype: String
      c. Datasource: ListLookup(ANZSIC Industries)
      d. Validation 01: match list
   4. Question code "Business_Property_Value"
      a. Label: "What is the value of your business property"
      b. Datatype: Money
      c. Validation 01: >0
      d. Validation 02: < MaxMoneyValue
   5. Question code "Business_Property_Has_Alarm"
      a. Label: "Does your premises have a working alarm installed"
      b. Datatype: Yes/No
   6. Question code "Business_Contents_On_Premises"
      a. Label: "What is the value of contents at your business premises"
      b. Datatype: Money
      c. Validation 01: >0
      d. Validation 02: < MaxMoneyValue
   7. Question code "Business_Money_On_Premises"
      a. Label: "What is the money at your business premises"
      b. Datatype: Money
      c. Validation 01: >0
      d. Validation 02: < MaxMoneyValue
   8. Question code "Business_Glass_External"
      a. Label: "Does your business premises have external glass"
      b. Datatype: Yes/No
   9. Question code "Machinery_Breakdown_Sum_Insured"
      a. Label: "What is the sum you would like to insurer for machinery breakdown"
      b. Datatype: Money
      c. Validation 01: >0
      d. Validation 02: < MaxMoneyValue
   10. Question code
      "Business_Interruption_Indemnity_Period"
      a. Label: "What is the maximum period measured in months of business interruption you would like to be covered for"
      b. Datatype: Integer
      c. Datasource: Enumeration(6, 12, 24, 36, 26, 52)
      d. Validation 01: match enumeration
   11. Question code "Email_Address"
      a. Label: "What is your email address"
      b. Datatype: String
      c. Validation 01: isValidEmailAddress
   12. Question code "Inception_Date"
      a. Label: "When would you like the policy to start"
      b. Datatype: Date
      c. Validation 01: isValidFutureDate
   13. Question code "Expiry_Date"
      a. Label: "When would you like the policy to end"
      b. Datatype: Date
      c. Validation 01: isValidFutureDate
      d. Validation 02: End_Date > Inception_Date
   14. Question code "Previous_Insurer"
      a. Label: "Who was your previous insurer"
      b. Datatype: String
   15. Question code "Significant claims in last 5 years"
      a. Label: "Have you in the last 5 years, made any claim(s) on an insurance policy for loss or damage either individually or cumulative over $10,000"
      b. Datatype: Yes/No
   16. Question code "Insurance declined or cancelled"
      a. Label: "Had any insurance declined or cancelled, application rejected, renewal refused, claim rejected, special conditions or excess imposed by an insurer"
      b. Datatype: Yes/No
   17. Question code "Suffered significant loss that would have been covered by business insurance"
      a. Label: "Suffered any loss or damage which would have been covered by the proposed business insurance policy greater than $50,000 either individually or cumulatively"
      b. Datatype: Yes/No

The system has answers recorded from a previous quote or policy for the client:
1. Question Code "Turnover"
   a. Answer: $1,000,000
2. Question code "ANZSICIndustry"
   a. Answer: "Bakery"

The system has the following insurer setup for the product:
1. Insurer ABC
   1.a. Public and Products Liability cover is provided
      1.a.i. Calculator:
         Input Turnover
         Input PL_Liability
         Input Industry
      setup BasePremiumRatingChart
      ("Turnover" as range | "Premium")
      {
      range 0 <<= $200,000|$456
      range $200,000 <<= $400,000|$2,560
      range $400,000 <<= $800,000|$4,290
      range $800,000 <<= $1,000,000|$8,440
      range $1,000,000 <<= $2,000,000|$10,000
      range $2,000,000 << |Refer("turnover requested too high") }
      setup LimitLoadingRatingChart
      ("Limit" as range | "Rate")
      {
      range 0 <<= $1,000,000|1.0
      range $1,000,000 <<= $2,000,000|1.1
      range $2,000,000 <<= $5,000,000|1.3
      range $5,000,000 <<= $10,000,000|1.4
      range $10,000,000 << |Refer("limit requested too high")
      }
      loading_rate = Lookup(LimitLoadingRatingChart by "Limit" using PL_Limit output "Rate")
      Premium = ToMoney(Lookup(BasePremiumRatingChart by "Turnover" using Turnover output "Premium") * loading_rate)
   1.b. General Property cover is provided
      1.b.i. ABC Public and Products Liability cover is a mandatory prerequisite (Order 10)
   1.c. Business Property cover is provided
      1.c.i. ABC Public and Products Liability cover is a mandatory prerequisite (Order 2)
      1.c.ii. Calculator:
         Input Business_Property_Value
         Input Business_Property_Has_Alarm
      setup AlarmLoadingRatingChart
      ("hasAlarm" | "Rate")
      {
      No|1.0
      Yes|0.97
      }
      alarm_loading = Lookup(AlarmLoadingRatingChart by " hasAlarm " using Business_Property_Has_Alarm output "Rate")
      Premium = ToMoney(0.008 * Business_Property_Value * alarm_loading)
   1.d. Electronic Equipment cover is provided
      1.d.i. ABC Public and Products Liability cover is a mandatory prerequisite (Order 11)
   1.e. Theft cover is provided
      1.e.i. ABC Public and Products Liability cover is a mandatory prerequisite (Order 9)
      1.e.ii. Calculator:
         Input Business_Contents_On_Premises
         Input Business_Property_Has_Alarm setup AlarmLoadingRatingChart
      ("hasAlarm | "Rate")
      {
      No|1.0
      Yes |0.846
      }
      alarm_loading = Lookup(AlarmLoadingRatingChart by " hasAlarm " using Business_Property_Has_Alarm output "Rate")
      Premium = ToMoney(0.011 * Business_Contents_On_Premises * alarm_loading)
   1.f. Money cover is provided
      1.f.i. ABC Public and Products Liability cover is a mandatory prerequisite (Order 8)
      1.f.ii. Theft cover is a prerequisite
      1.f.iii. Calculator:
         Input Business_Money_On_Premises
         Premium = = ToMoney(0.138 * Business_Money_On_Premises)
   1.g. Glass cover is provided
      1.g.i. ABC Public and Products Liability cover is a mandatory prerequisite (Order 7)
      1.g.ii. Theft cover is a prerequisite
      1.g.iii. Calculator:
         Input Business_Glass_External
      setup BasePremiumRatingChart
      ("HasExternalGlass" | "Premium")
      {
      No|$456
      Yes|$2,000
      }
      Premium = ToMoney(Lookup(BasePremiumRatingChart by "HasExternalGlass" using Business_Glass_External output "Premium"))
   1.h. Machinery Breakdown cover is provided
      1.h.i. ABC Public and Products Liability cover is a mandatory prerequisite (Order 5)
      1.h.ii. Calculator:
         Input Machinery_Breakdown_Sum_Insured
         Premium = 0.15 * Machinery_Breakdown_Sum_Insured
   1.i. Business Interruption cover is provided
      1.i.i. ABC Public and Products Liability cover is a mandatory prerequisite (Order 15)
      1.i.ii. Calculator:
         Input Business_Interruption_Indemnity_Period
         Input Turnover
      setup PeriodLoadingRatingChart
      ("Months" as range | "Rate")
      {
      range 0 <<= 6|1.0
      range 6 <<= 12|2.1
      range 12 <<= 26|4.2
      range 26 <<= 36|9.4
      range 36 <<= 52|18.5
      range 52 << |Refer("period requested too high")
      }
      period_loading = Lookup(PeriodLoadingRatingChart by " Months " using Business_Interruption_Indemnity_Period output "Rate")
      Premium = ToMoney(0.011* Turnover * period_loading)
   1.j. Management Liability cover is provided
   1.k. Tax Audit cover is provided
   1.1. Quesions
      1.l.i. Question code: "Significant claims in last 5 years"
         1. Rule 01: if Yes then Referra("A significant claim or claims have been made in the last five years")
   1.l.ii. Question code: "Insurance declined or cancelled" 1. Rule 01: if Yes then Referral("Insurance has been declined or cancelled previously")
   1.l.iii. Question code: "Suffered significant loss that would have been covered by business insurance" 1. Rule 01: if Yes then Referral("A significant loss has been suffered that would have been covered by business insurance")
2. Insurer KLM
   2.a. Public and Products Liability cover is provided
      2.a.i. Calculator:
         Premium = ToMoney(14000)
   2.b. General Property cover is provided
      2.b.i. ABC KLM Public and Products Liability cover is a mandatory prerequisite (Order 14)
   2.c. Business Property cover is provided
      2.c.i. ABC KLM Public and Products Liability cover is a mandatory prerequisite (Order 1)
      2.c.ii. Calculator
         Premium = ToMoney(7000)
   2.d. Electronic Equipment cover is provided
      2.d.i. General Property cover is a prerequisite (Order 3)
   2.e. Theft cover is provided
      2.e.i. Calculator:
         Premium = ToMoney(2000)
   2.f. Money cover is provided
      2.f.i. KLM Theft cover is a prerequisite (Order 4)
      2.f.ii. Calculator
         Premium = ToMoney(400)
   2.g. Glass cover is provided
   2.i. KLM Theft cover is a prerequisite (Order 6)
      2.i.ii. Calculator
         Premium = ToMoney(1500)
   2.h. Machinery Breakdown cover is provided
      2.h.i. KLM Electronic Equipment is a co-requisite (Order 12)
   2.i. Business Interruption cover is provided
      2.i.i. KLM Machinery Breakdown is a co-requisite (Order 13)
      2.i.ii. Calculator
         Premium = ToMoney(10000)
   2.j. Management Liability cover is provided
   2.k. Tax Audit cover is provided
3. Insurer XYZ
   3.a. The insurer provides a discount of 5% is given if all covers chosen are for this insurer
   3.b. Public and Products Liability cover is provided 3.b.i. Calculator
      Premium = ToMoney(14000)
   3.c. General Property cover is provided
   3.d. Business Property cover is provided
      3.d.i. Calculator
         Premium = ToMoney(8000)
   3.e. Electronic Equipment cover is provided
   3.f. Theft cover is provided
      3.f.i. Calculator
         Premium = ToMoney(2500)
   3.g. Money cover is provided
      3.g.i. Calculator
         Premium = ToMoney(300)
   3.h. Glass cover is provided
      3.h.i. Calculator
         Premium = ToMoney(2000)
   3.i. Machinery Breakdown cover is provided 3.i.i. Calculator
      Premium = ToMoney(1900)
   3.j. Business Interruption cover is provided 3.j.i. Calculator
      Premium = ToMoney(10000)
   Note: The calculators for KLM and XYZ are abbreviated to return a single premium, and this is for the purposes of the example only. In alternative configurations the calculators would be similar to the simplified calculators shown above for the ABC insurer

### Step 1

The system loads up any specific product questions at 400.

Example results:
1. Question: "What is your email address"
2. Question: "When would you like the policy to start"
3. Question: "When would you like the policy to end"

### Step 2

In the system the first step is a search of the covers that are configured for the product at 401.

Example results:
1. Public and Products Liability
2. General Property
3. Business Property
4. Electronic Equipment
5. Theft
6. Money
7. Glass
8. Machinery Breakdown
9. Business Interruption
10. Management Liability
11. Tax Audit

### Step 3

The system searches for the insurers that are configured to provide those covers in that product at 402.

Example results:
1. ABC
   a. Public and Products Liability
   b. General Property
   c. Business Property
   d. Electronic Equipment
   e. Theft
   f. Money
   g. Glass
   h. Machinery Breakdown
   i. Business Interruption
   j. Management Liability
   k. Tax Audit
2. KLM
   a. Public and Products Liability
   b. General Property
   c. Business Property
   d. Electronic Equipment
   e. Theft
   f. Money
   g. Glass
   h. Machinery Breakdown
   i. Business Interruption
   j. Management Liability
   k. Tax Audit
3. XYZ
   a. Public and Products Liability
   b. General Property
   c. Business Property
   d. Electronic Equipment
   e. Theft
   f. Money
   g. Glass
   h. Machinery Breakdown
   i. Business Interruption

### Step 4

The system now looks up the insurer specific calculators for each of the covers found at 403. The calculators are loaded and queried to determine the inputs they use and each input has a unique code.

### Example results:

Note: the number of real questions is too large to fit here so this is a summarised list.
1. ABC
   a. Public and Products Liability
      i. Input Turnover
      ii. Input PL_Liability
      iii. Input Industry
   b. Theft
      i. Input Business_Contents_On_Premises
      ii. Input Business_Property_Has_Alarm
   c. Money
      i. Input Business_Money_On_Premises
   d. Glass
      i. Input Business_Glass_External
   e. Machinery Breakdown
      i. Input Machinery_Breakdown_Sum_Insured
   f. Business Interruption
      i. Input
         Business_Interruption_Indemnity_Period
      ii. Input Turnover
2. KLM
   a. Public and Products Liability
      i. Input Turnover
      ii. Input PL_Liability
      iii. Input Industry
   b. Theft
      i. Input Business_Contents_On_Premises
      ii. Input Business_Property_Has_Alarm
   c. Money
      i. Input Business_Money_On_Premises
   d. Glass
      i. Input Business_Glass_External
   e. Machinery Breakdown
      i. Input Machinery_Breakdown_Sum_Insured
   f. Business Interruption
      i. Input
         Business_Interruption_Indemnity_Period
      ii. Input Turnover
3. XYZ
   a. Public and Products Liability
      i. Input Turnover
      ii. Input PL_Liability
      iii. Input Industry
   b. Theft
      i. Input Business_Contents_On_Premises
      ii. Input Business_Property_Has_Alarm
   c. Money
      i. Input Business_Money_On_Premises
   d. Glass
      i. Input Business_Glass_External
   e. Machinery Breakdown
      i. Input Machinery_Breakdown_Sum_Insured
   f. Business Interruption
      i. Input
         Business_Interruption_Indemnity_Period
      ii. Input Turnover

### Step 5

Those questions are then merged to remove repetition at 405. The code for each input is then used to search a pool of common questions and the settings from the matches found are loaded at 406.

### Example result:

i. Question: "What is your turnover", Validation: Required
ii. Question: "What limit of PL liability would you like", Validation: Required
iii. Question: "What is your industry", Validation: Required
iv. Question: "What is the value of your business property", Validation: Required
v. Question: "Does your premises have a working alarm installed" Validation: Required
vi. Question: "What is the value of contents at your business premises", Validation: Required
vii. Question: "What is the money at your business premises", Validation: Required
viii. Question: "Does your business premises have external glass", Validation: Required
ix. Question: "What is the sum you would like to insurer for machinery breakdown", Validation: Required
x. Question: "What is the maximum period measured in months of business interruption you would like to be covered for", Validation: Required

### Step 6

The system searches for past answers to those questions from the current client and attaches those as default answers to each related question 406. The questions and settings are provided to the Client Requirements Collector at 407 408.

### Example result:

i. Question: "What is your turnover", recorded answer: $1,000,000
ii. Question: "What limit of PL liability would you like", no recorded answer
iii. Question: "What is your industry", recorded answer: "Bakery"
iv. Question: "What is the value of your business property" no recorded answer
v. Question: "Does your premises have a working alarm installed" no recorded answer
vi. Question: "What is the value of contents at your business premises" no recorded answer
vii. Question: "What is the money at your business premises" no recorded answer
viii. Question: "Does your business premises have external glass" no recorded answer
ix. Question: "What is the sum you would like to insurer for machinery breakdown" no recorded answer
x. Question: "What is the maximum period measured in months of business interruption you would like to be covered for" no recorded answer

### Step 7

The Client Requirements Collector now displays the questions to the client based on settings for each question. The client enters the data, possibly in one or more pages and submits the data for a quick quote.
Note: A quick quote is an indicative price which is different from a formal quote. A formal quote is a contract that is valid for 30 days.

When the client submits the data the system runs the validation rule list for each question at 409. If the validation fails the Client Data Collector displays messages relating to each validation error to the client and redisplays the question for data collection to the client.

Once the client submits data that successfully passes validation the system stores each answer provided in a repository for that client for that question and if the client previously answered the question with a different answer creates a versioned answer, preserving a history of answers per question for the client.

### Example result:

i. Question: Do you want Public and Products Liability cover? Answer: "Yes"
ii. Question: Do you want General Property cover? Answer: "No"
iii. Question: Do you want Business Property cover? Answer: "Yes"
iv. Question: Do you want Electronic Equipment cover? Answer: "No"
v. Question: Do you want Theft cover? Answer: "Yes"
vi. Question: Do you want Money cover? Answer: "Yes"
vii. Question: Do you want Glass cover? Answer: "Yes"
viii. Question: Do you want Machinery Breakdown cover? Answer: "Yes"
ix. Question: Do you want Business Interruption cover? Answer: "Yes"
x. Question: Do you want Management Liability cover? Answer: "No"
xi. Question: Do you want Tax Audit cover? Answer: "No"
xii. Question: "What is your turnover", answer: $1,000,000
xiii. Question: "What limit of PL liability would you like", answer: "$5m"
xiv. Question: "What is your industry", recorded answer: "Bakery"
xv. Question: "What is the value of your business property" answer: $600,000
xvi. Question: "Does your premises have a working alarm installed" answer: "Yes"
xvii. Question: "What is the value of contents at your business premises" answer: $250,000
xviii. Question: "What is the money at your business premises" answer: $1500
xix. Question: "Does your business premises have external glass" answer: "Yes"
xx. Question: "What is the sum you would like to insurer for machinery breakdown" answer $10,000
xxi. Question: "What is the maximum period measured in months of business interruption you would like to be covered for" answer: 6

### Step 8

Next the system loads the rules for each cover and orders them at 410.

### Example result:

1. Insurer KLM
   a. Business Property cover
      i. ABC Public and Products Liability cover is a mandatory prerequisite (Order 1)
2. Insurer ABC
   a. Business Property cover
      i. ABC Public and Products Liability cover is a mandatory prerequisite (Order 2)
3. Insurer KLM
   a. Electronic Equipment cover
      i. General Property cover is a prerequisite (Order 3)
4. Insurer KLM
   a. Money cover
      i. KLM Theft cover is a prerequisite (Order 4)
5. Insurer ABC
   a. Machinery Breakdown cover
      i. ABC Public and Products Liability cover is a mandatory prerequisite (Order 5)
6. Insurer KLM
   a. Glass cover
      i. KLM Theft cover is a prerequisite (Order 6)
7. Insurer ABC
   a. Glass cover
      i. ABC Public and Products Liability cover is a mandatory prerequisite (Order 7)
      ii. Theft cover is a prerequisite
8. Insurer ABC
   a. Money cover
      i. ABC Public and Products Liability cover is a mandatory prerequisite (Order 8)
      ii. Theft cover is a prerequisite
9. Insurer ABC
   a. Theft cover
      i. ABC Public and Products Liability cover is a mandatory prerequisite (Order 9)
10. Insurer ABC
   a. General Property cover
      i. ABC Public and Products Liability cover is a mandatory prerequisite (Order 10)
11. Insurer ABC
   a. Electronic Equipment cover
      i. ABC Public and Products Liability cover is a mandatory prerequisite (Order 11)
12. Insurer KLM
   a. Machinery Breakdown cover
      i. KLM Business Interruption is a co-requisite (Order 12)
13. Insurer KLM
   a. Business Interruption cover
      i. KLM Machinery Breakdown is a co-requisite (Order 13)
14. Insurer ABC
   a. General Property cover
      i. ABC Public and Products Liability cover is a mandatory prerequisite (Order 14)
15. Insurer ABC
   a. Business Interruption cover
      i. ABC Public and Products Liability cover is a mandatory prerequisite (Order 15)

1. Insurer ABC
   a. General Property cover
      i. ABC Public and Products Liability cover is a mandatory prerequisite
   b. Business Property cover
      i. ABC Public and Products Liability cover is a mandatory prerequisite
   c. Electronic Equipment cover
      i. ABC Public and Products Liability cover is a mandatory prerequisite
   d. Theft cover
      i. ABC Public and Products Liability cover is a mandatory prerequisite
   e. Money cover
      i. ABC Public and Products Liability cover is a mandatory prerequisite
      ii. Theft cover is a prerequisite
   f. Glass cover
      i. ABC Public and Products Liability cover is a mandatory prerequisite
      ii. Theft cover is a prerequisite
   g. Machinery Breakdown cover
      i. ABC Public and Products Liability cover is a mandatory prerequisite
   h. Business Interruption cover
      i. ABC Public and Products Liability cover is a mandatory prerequisite
2. Insurer KLM
   a. General Property cover
      i. KLM Public and Products Liability cover is a mandatory prerequisite
   b. Business Property cover
      i. KLM Public and Products Liability cover is a mandatory prerequisite
   c. Electronic Equipment cover
      i. General Property cover is a prerequisite
   d. Money cover
      i. KLM Theft cover is a prerequisite
   e. Glass cover
      i. KLM Theft cover is a prerequisite
   f. Machinery Breakdown cover
      i. KLM Business Interruption is a co-requisite
   g. Business Interruption cover
      i. KLM Machinery Breakdown is a co-requisite

### Step 9

The rules are then searched with a linear sequential search algorithm to find matching combinations at 411.

The rules are ordered and any rule that fires to exclude a cover is promoted in the global list using a transpose method so that rules that are likely to exclude matches are tested earlier for the next search.

### Example results:

1. Option 1
   a. ABC covers
      i. Public and Products Liability
      ii. Business Property
      iii. Theft
      iv. Money
      v. Glass
      vi. Machinery Breakdown
      vii. Business Interruption
2. Option 2
   a. KLM covers
      i. Public and Products Liability
      ii. Business Property
      iii. Theft
      iv. Money
      v. Glass
      vi. Business Interruption
   b. XYZ covers
      i. Machinery Breakdown
3. Option 3
   a. XYZ covers
      i. Public and Products Liability
      ii. Business Property
      iii. Theft
      iv. Money
      v. Glass
      vi. Machinery Breakdown
      vii. Business Interruption
4. Option 4
   a. ABC covers
      i. Public and Products Liability
   b. XYZ covers
      i. Business Property
      ii. Theft
      iii. Money
      iv. Glass
      v. Machinery Breakdown
      vi. Business Interruption
5. Option 5
   a. KLM covers
      i. Public and Products Liability
   b. XYZ covers
      i. Business Property
      ii. Theft
      iii. Money
      iv. Glass
      v. Machinery Breakdown
      vi. Business Interruption
6. Option 6
   a. ABC covers
      i. Public and Products Liability
      ii. Business Property
      iii. Theft
      iv. Money
      v. Glass
      vi. Machinery Breakdown
   b. XYZ covers
      i. Business Interruption
7. Option 7
   a. KLM covers
      i. Public and Products Liability
      ii. Business Property
      iii. Theft
      iv. Money
      v. Glass
   b. XYZ covers
      i. Machinery Breakdown
      ii. Business Interruption
etc...
Note 1: There are many more possible combinations that will not add to the example, so these are omitted here Note 2: The co-requisite rule on KLM's Machinery Breakdown fired an exclusion, because KLM requires that Electronic Equipment must also be taken. This means the firing of this rule also results in a change to the ordering of the rules; KLM Machinery Breakdown (Order 12) would be transposed with Electronic Equipment cover (Order 11) to become KLM Machinery Breakdown (Order 11) and Electronic Equipment cover (Order 12)

### Step 10

The system loads the calculators for each cover found and runs the calculation at 412. A calculator can result in a price, or a flag for referral, or a flag for decline. A decline indicates that based on the provided inputs the cover cannot be provided, while a referral indicates that in extraordinary circumstances details may be provided on a case by case basis that allows the cover to be provided if certain criteria are met. Referrals require the client to speak with an insurance broker to confirm those circumstances.

### Example results:

1. Option 1
   a. ABC covers
      i. Public and Products Liability: $13,000.00
      ii. Business Property: $4,565.00
      iii. Theft: $2,326.00
      iv. Money: $207.00
      v. Glass: $2,000.00
      vi. Machinery Breakdown: $1,500.00
      vii. Business Interruption: $11,000
   b. Total: $34,689.50
2. Option 2
   a. KLM covers
      i. Public and Products Liability: $14000.00
      ii. Business Property: $7,000.00
      iii. Theft: $2,000.00
      iv. Money: $400.00
      v. Glass: $1,500.00
      vi. Business Interruption: $10,000.00
   b. XYZ covers
      i. Machinery Breakdown: $1,900.00
   c. Total: $36,800.00
3. Option 3
   a. XYZ covers
      i. Public and Products Liability: $13,300.00
      ii. Business Property: $7,600.00
      iii. Theft: $2,375.00
      iv. Money: $285.00
      v. Glass: $1,900.00
      vi. Machinery Breakdown: $1,805.00
      vii. Business Interruption: $9,500.00
   b. Total: $36765.00
4. Option 4
   a. ABC covers
      i. Public and Products Liability: $13,000.00
   b. XYZ covers
      i. Business Property: $8,000.00
      ii. Theft: $2,500.00
      iii. Money: $300.00
      iv. Glass: $2,000.00
      v. Machinery Breakdown: $1,900.00
      vi. Business Interruption: $10,000.00
   c. Total: $37,700.00
5. Option 5
   a. KLM covers
      i. Public and Products Liability: $14000.00
   b. XYZ covers
      i. Business Property: $8,000.00
      ii. Theft: $2,500.00
      iii. Money: $300.00
      iv. Glass: $2,000.00
      v. Machinery Breakdown: $1,900.00
      vi. Business Interruption: $10,000.00
   c. Total: $38,700.00
6. Option 6
   a. ABC covers
      i. Public and Products Liability: $13,000.00
      ii. Business Property: $4,565.00
      iii. Theft: $2,326.00
      iv. Money: $207.00
      v. Glass: $2,000.00
      vi. Machinery Breakdown: $1,500.00
   b. XYZ covers
      i. Business Interruption: $10,000.00
   c. Total: $33,689.50
7. Option 7
   a. KLM covers
      i. Public and Products Liability: $14000.00
      ii. Business Property: $7,000.00
      iii. Theft: $2,000.00
      iv. Money: $400.00
      v. Glass: $1,500.00
   b. XYZ covers
      i. Machinery Breakdown: $1,900.00
      ii. Business Interruption: $10,000.00
   c. Total: $36,800.00
Etc...
Note: pricing calculations are simplified and do not show GST and other government charges and duties that the real system calculates

### Step 11

The system then ranks the results 416. In the example below this is sorted by price

### Example results:

1. (Option 6)ABC + XYZ Business Interruption
   $33,689.50
2. (Option 1) ABC Bizpack
   $34,689.50
3. (Option 3) XYZ Bizpack
   $36,765.00
4. (Option 2) KLM + XYZ Machine Breakdown
   $36,800.00
5. (Option 7) KLM + XYZ Machine Breakdown & Business Interruption $36,800.00
6. (Option 4) ABC PL + XYZ
   $37,700.00
7. (Option 5) KLM PL + XYZ
   $38,700.00

For this example we are not showing all possible permutations of the covers combinations

### Step 12

The system limits the number of results it provides to the client at 416. In this example we are limiting to 5.

### Example results

1. ABC + XYZ Business Interruption
   $33,689.50
2. ABC Bizpack
   $34,689.50
3. XYZ Bizpack
   $36,765.00
4. KLM + XYZ Machine Breakdown
   $36,800.00
5. KLM + XYZ Machine Breakdown & Business Interruption $36,800.00

### Step 13

In the user interface the client is shown the options and has controls to choose one of those options at 417. They also have the ability to add in more covers, or remove covers from the policy which executes the process again. They can also adjust the answers to questions either to correct values with errors or to see alternative options. The system stores all the cover results separately in a breakdown.

### Example results:

1. User chooses ABC + XYZ Business Interruption $33,689.50

### Step 14

The system loads additional questions specific to the insurer and covers chosen for the product at 418. The system loads up any insurer specific questions for this product at 419.

### Example results:

1. ABC
   a. Question: "Have you in the last 5 years, made any claim(s) on an insurance policy for loss or damage either individually or cumulative over $10,000"
   b. Question "Had any insurance declined or cancelled, application rejected, renewal refused, claim rejected, special conditions or excess imposed by an insurer"
   c. Question: "Suffered any loss or damage which would have been covered by the proposed insurance policy greater than $50,000 either individually or cumulatively"

### Step 15

The system passes the answers and insurer choice to the Quote Generator. The quote generator first compares the answers to cover rules to check for referral or decline of the quote based on the answers provided.

The Quote Generator then loads the calculators at 425 and recalculates the prices at the time of the quote.

The Quote Generator timestamps the quote results.

The Quote Generator then loads the default quote document templates for the insurer for this product. If an insurer specific quote template is not set then the Quote Generator loads the default quote document templates.

The quote templates for each cover for the insurer are then loaded for the included covers. If there is no template for a cover the default quote template for the cover is used.

The quote document and cover templates are then combined and the resulting template is merged with the data for the client's details, policy details and invoice details and the resulting quote documents are stored in the system at 432 433.

### Step 16

The Payment Choice generator loads the options for payment for this product and insurer combination at 434. The Client Payment Chooser presents the payment options to the client and also provides the quote documents to the client.

### Step 17

The client chooses a payment option at 435, for example by credit card. The quote is checked for expiry that it is not expired and if it is still valid the payment is processed at 436.

If the payment is successful the system Policy Generator then loads the default policy document templates for the insurer for this product at 437. If an insurer specific policy template is not set then the Policy Generator loads the default policy document templates.

The policy templates for each cover for the insurer are then loaded for the included covers. If there is no policy template for a cover the default policy template for the cover is used. The policy document and cover templates are then combined at 439 and the resulting template is merged with the data for the client's details, policy details and invoice details and the resulting policy documents are stored in the system at 440 441.

### Step 18

The system provides the client with a confirmation of payment, and provides the policy documents to the client to end the process of generating a new policy at 442.

It will be clear to those skilled in the art that the embodiments of the present invention are not limited to access by customers over network connections. Embodiments of the invention provide a means for creating co-insurance policies to meet customer requirements taking into account of any rules and restrictions associated with those insurance policies. Insurance brokers or insurance companies can use embodiments of the invention to create policies for customers upon request, regardless of how those requests are received. Clearly, requests may be received across an online network, via a website or alternatively may be requested in person, over the telephone or via some other communication means.

Embodiments of the present invention facilitate creating co-insurance policies without requiring lengthy and complicated manual intervention.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. An insurance product compilation process comprising:
establishing a communications channel with a client system via a network,
receiving a customer product request from the client system via the network,
automatically generating customer questions in dependence on the customer product request,
presenting the customer questions to the client system via the communications channel,
receiving customer responses to the customer questions,
automatically deriving product requirements from the customer responses,
automatically retrieving a plurality of modules that satisfy product requirements using customer responses, and
compiling at least one product from the modules that satisfies the customer requirements.

2. An insurance product compilation process according to claim 1 comprising the further step of:
receiving across a communications channel identification of customer information fields required to obtain the requested product;
extracting from the identified customer information fields a set of the customer information fields required to retrieve product criteria for the requested product;
wherein the automatically generated questions are associated with the set of customer information fields.

3. An insurance product compilation process according to claim 2, 3 or 4 comprising the step of determining additional customer information fields beyond the set of customer information fields comprised in the identified customer information fields; and, providing dummy information for the additional customer information fields when retrieving the modules.

4. An insurance product compilation process according to claim 2, 3 or 4 comprising the step of presenting the product criteria to the client system via the communications channel.

5. An insurance product compilation process according to claim 3 comprising the further steps of:
receiving a customer request to retrieve at least one of the compiled products;
determining additional customer information fields required to retrieve the requested compiled product; and,
generating further customer questions in dependence on additional information fields being required.

6. An insurance product compilation process according to claim 1, 2, 3, 4 or 5 wherein the modules have compilation restrictions that restrict the incorporation of the module within an insurance product, the compiled product satisfying the compilation restrictions.

7. An insurance product compilation process according to any of claims 2 to 6 wherein the set of customer information fields includes all the identified customer information fields.

8. An insurance product compilation process according to any of claims 2 to 7 wherein the product criteria is product price.

9. An insurance product compilation process according to claim 6 wherein the compilation restrictions of modules comprise restricting combination of a first module with a second module within an insurance product.

10. An insurance product compilation system comprising:
Communication bus for establishing a communications channel with a client system via a network,
Receiver for receiving a customer product request from the client system via the network,
Processor for automatically generating customer questions,
Means for presenting the customer questions to the client system via the communications channel,
Receiver for receiving customer responses to the customer questions,
Processor for automatically deriving product requirements from the customer responses,
Search engine for automatically retrieving a plurality of modules that satisfy product requirements, and
Compilation engine for compiling an insurance product from the modules that satisfies the customer requirements.

11. An insurance product compilation system according to claim 10 comprising the further step of:
Receiver for receiving across a communications channel identification of customer information fields required to obtain the requested product;
extraction engine for extracting from the identified customer information fields a set of the customer information fields required to retrieve product criteria for the requested product;
wherein the automatically generated questions are associated with the set of customer information fields.

12. An insurance product compilation system according to claim 10 or 11 wherein the extraction engine determines additional customer information fields beyond the set of customer information fields comprised in the identified customer information fields; and, the search engine provides dummy information for the additional customer information fields when retrieving the modules.

13. An insurance product compilation system according to claim 10, 11 or 12 comprising a transmitter to transmit product criteria associated with compiled insurance products to the client system via the communications channel.

14. An insurance product compilation system according to claim 10 to 12 comprising:
Receiver for receiving a customer request to retrieve at least one of the compiled products from the client system via the communications channel;
Extraction engine determining additional customer information fields required to retrieve the requested compiled product; and,
Processor generating further customer questions in dependence on additional information fields being required.

15. An insurance product compilation system according to any of claims 10 to 14 wherein the compilation engine receives compilation restrictions associated with modules that restrict the incorporation of the module within an insurance product, the compilation engine compiling products satisfying the compilation restrictions.
